(19) Europäisches Patentamt
European Patent Office
Office européen des brevets

(11) **EP 2 709 257 A2**

(12) **EUROPÄISCHE PATENTANMELDUNG**

(43) Veröffentlichungstag:
**19.03.2014 Patentblatt 2014/12**

(51) Int Cl.:
**H02M 3/338** (2006.01)

(21) Anmeldenummer: **13184658.6**

(22) Anmeldetag: **17.09.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.09.2012 DE 102012216691**

(71) Anmelder: **Bombardier Transportation GmbH 10785 Berlin (DE)**

(72) Erfinder: **Scholten, Johannes 67283 Obrigheim (DE)**

(74) Vertreter: **Ramrath, Lukas Patentanwälte Bressel und Partner mbB Potsdamer Platz 10 10785 Berlin (DE)**

(54) **Stromrichterschaltung und Verfahren zur Steuerung der Stromrichterschaltung**

(57) Stromrichterschaltung und Verfahren zur Steuerung eines ersten und mindestens eines weiteren Schaltelements, umfassend
- mindestens ein eingangsseitiges kapazitives Element,
- mindestens ein ausgangsseitiges kapazitives Element,
- mindestens ein erstes, ein zweites, ein drittes und ein viertes Durchlasselement,
- ein erstes und mindestens ein weiteres Schaltelement (1, 2),
- mindestens ein resonantes kapazitives Element und
- mindestens ein resonantes induktives Element,
wobei das erste Durchlasselement, das zweite Durchlasselement, das dritte Durchlasselement und das vierte Durchlasselement gleichsinnig in Reihe geschaltet sind, wobei eine Reihenschaltung der vier Durchlasselemente parallel zu einem Schaltungszweig geschaltet ist, in dem mindestens das eingangsseitige kapazitive Element angeordnet ist,
wobei das resonante kapazitive Element in mindestens einem Resonanzzweig angeordnet ist, wobei der mindestens eine Resonanzzweig parallel zu einem Schaltungszweig geschaltet ist, in dem eine Reihenschaltung aus dem zweiten und dem dritten Durchlasselement angeordnet ist,
wobei das ausgangsseitige kapazitive Element parallel zu einem Schaltungszweig geschaltet ist, in dem mindestens eine Reihenschaltung aus dem dritten und dem vierten Durchlasselement angeordnet ist,
wobei das erste Schaltelement (1) elektrisch parallel zu dem ersten Durchlasselement und das weitere Schaltelement (2) elektrisch parallel zu dem zweiten Durchlasselement geschaltet ist oder das erste Schaltelement (1) elektrisch parallel zu dem dritten Durchlasselement und das weitere Schaltelement (2) elektrisch parallel zu dem vierten Durchlasselement geschaltet ist.

Fig.1

Printed by Jouve, 75001 PARIS (FR)

## Beschreibung

Die Erfindung betrifft eine Stromrichterschaltung, insbesondere eine Stromrichterschaltung zur Umwandlung einer Gleichspannung in eine weitere Gleichspannung. Weiterhin betrifft die Erfindung ein Verfahren zur Steuerung von mindestens zwei Schaltelementen der Stromrichterschaltung.

DC-DC-Stromrichter, auch DC-DC-Wandler genannt, werden unter anderem verwendet, um elektrische Energie von einem ersten Gleichspannungsniveau auf ein oder mehrere von diesem ersten Gleichspannungsniveau verschiedene(s) Gleichspannungsniveau(s) umzuwandeln oder umzuformen. In diesem Fall kann auch von einer Umrichterschaltung oder einer Umformerschaltung gesprochen werden. Hierbei wird zwischen galvanisch getrennten Stromrichtern und galvanisch gekoppelten Stromrichtern unterschieden. Bei galvanisch gekoppelten Stromrichtern ist eine leitende Verbindung zwischen den beiden Spannungsniveaus vorhanden. Bei galvanisch getrennten Stromrichtern ist keine leitende Verbindung vorhanden, sodass ein Energiefluss über einen internen Transformator erfolgen muss. Da eine Energieübertragung über einen Transformator eine Wechselspannung benötigt, sind für einen Transport elektrischer Energie von dem ersten Gleichspannungsniveau hin zu dem weiteren Gleichspannungsniveau eine Wechselrichtung und eine Gleichrichtung erforderlich. Stromrichter oder Umformer mit galvanischer Trennung sind auch bekannt unter der Bezeichnung Durchflusswandler, Sperrwandler und Resonanzwandler. Ein solcher Resonanzwandler wird z. B. in der DE 196 30 284 A1 beschrieben.

Es gibt Anwendungen, bei denen eine galvanische Trennung nicht erforderlich ist. Für derartige Anwendungen wurde eine Vielzahl von bekannten Schaltungen entwickelt, z. B. eine so genannte Buck-Converter-Schaltung, eine Boost-Converter-Schaltung, eine Synchronwandler-Schaltung oder eine SEPIC-Wandler-Schaltung. Schaltungen, die eine Eingangsspannung in eine niedrigere Ausgangsspannung transformieren, werden auch als Abwärtswandler oder Tiefsetzsteller bezeichnet. Entsprechend werden Schaltungen, die eine Eingangsspannung in eine höhere Ausgangsspannung transformieren, als Aufwärtswandler oder Hochsetzsteller bezeichnet. Weiter existieren Schaltungen, die sowohl als Abwärtswandler und als Aufwärtswandler betrieben werden können.

So beschreibt die DE 197 00 100 C2 einen bekannten Abwärtswandler. In der WO 2006/122084 A2 ist ein SEPIC-Wandler offenbart, der sowohl als Abwärtswandler, als auch als Aufwärtswandler betrieben werden kann.

Die DE 10 2005 041 825 offenbart einen Synchronwandler, der einen bidirektionalen Energiefluss elektrischer Energie ermöglicht. Durch eine derartige Schaltung wird eine Eingangsspannung mittels Leistungsschaltern auf eine wählbare niedrigere Spannung auf einer Ausgangsseite gewandelt. Dies kann durch abschnittsweises Ein- und Ausschalten der Leistungsschalter bewirkt werden. Ein Verhältnis zwischen einer Leitdauer zu einer Summe der Leitdauer und einer Ausschaltdauer kann als Tastgrad oder Aussteuerung der Schaltung bezeichnet werden. Diese Aussteuerung bestimmt die Höhe der Ausgangsspannung. Zur Begrenzung und Glättung eines Stromes werden jedoch so genannte Stellerdrosseln benötigt. Diese können eine große Baugröße und ein hohes Gewicht aufweisen sowie hohe Leistungsverluste während des Betriebes erzeugen. Außerdem können sie einen unerwünscht hohen Geräuschpegel erzeugen. Ein weiterer Nachteil beim Betrieb eines Synchronwandlers ist die Tatsache, dass die Leistungsschalter in einem so genannten hart schaltenden Betrieb arbeiten müssen. Hierbei werden Leistungsschalter sperrend geschaltet, während sie einen hohen Strom führen, oder leitend geschaltet, wobei sie einen hohen Strom aufnehmen müssen. Hierdurch werden Schaltverluste erzeugt, die einen Wirkungsgrad der Schaltung verschlechtern und gleichzeitig einen erhöhten Aufwand für Kühlung erfordern. Auch muss ein als Leistungsschalter ausgebildetes Halbleiterbauelement gemäß seiner Gesamtverlustleistung dimensioniert werden. Je höher die Verlustleistung, desto größer eine Baugröße des Halbleiterbauelements.

Weiter nachteilig ergibt sich, dass ein als Leistungsschalter ausgebildetes Halbleiterbauelement eine Sperrspannung aufweisen muss, die höher als die höchste an der Schaltung anliegende Spannung sein muss. Gleichzeitig muss das Halbleiterbauelement jedoch auch für einen höheren Strom auf einer Seite mit einer niedrigen Spannung dimensioniert sein, falls die Topologie der Schaltung derart beschaffen ist, dass der Strom auf der Seite mit der niedrigen Spannung auch durch das Halbleiterbauelement fließen muss. Hierdurch ist das Halbleiterbauelement sowohl für eine hohe Spannung als auch für einen hohen Strom auszulegen.

Es stellt sich das technische Problem, eine Stromrichterschaltung sowie ein Verfahren zur Steuerung von Schaltelementen einer Stromrichterschaltung zu schaffen, welche einen Betrieb der Stromrichterschaltung mit reduzierten Verlusten ermöglicht, wobei Anforderungen an eine Auslegung von Bauelementen der Stromrichterschaltung geringer als im Fall des vorhergehend erläuterten Synchronwandlers sind.

Die Lösung des technischen Problems ergibt sich aus den Gegenständen der Ansprüche 1, 5 und 7. Weitere vorteilhafte Ausgestaltungen der Erfindung ergeben sich aus den Unteransprüchen.

Vorgeschlagen wird eine Stromrichterschaltung. Die Stromrichterschaltung kann auch als Umrichterschaltung bezeichnet werden. Die Stromrichterschaltung dient zur Umwandlung einer Gleichspannung, z.B. einer Eingangsspannung, in eine höhere oder niedrigere Gleichspannung, z.B. eine Ausgangsspannung. Der vorgeschlagene Stromrichter kann beispielsweise ein Stromrichter eines Schienenfahrzeugs sein. Hierbei kann die Stromrichterschaltung zur Versorgung von elektrischen Systemen von Schienenfahrzeugen, z. B. in Eisenbahnen, benutzt werden. Beispielsweise kann eine Eingangsspannung in eine niedrigere Ausgangsspannung umgewandelt werden, wobei die Ausgangsspannung zur Versorgung von Verbrauchern, wie z. B. Lüftern, dienen kann. Auch kann die Stromrichterschaltung eine bei rekuperativem Bremsen erzeugte und gleichgerichtete Eingangsspannung in eine höhere oder niedrigere Ausgangsspannung umwandeln.

Die Stromrichterschaltung umfasst mindestens ein eingangsseitiges kapazitives Element. Unter einem kapazitiven Element kann ein Element verstanden werden, welches eine Spannung konstant oder annähernd konstant hält, auch wenn ein Strom durch das Element fließt. Auch kann unter dem kapazitiven Element ein Element verstanden werden, dem eine bestimmte differenzielle Kapazität zugeordnet ist, wobei mittels der differenziellen Kapazität eine Änderung einer Spannung über dem Element in Abhängigkeit einer zeitlichen Änderung eines Stromflusses durch das Element beschreibbar ist. Das kapazitive Element kann z. B. als Kondensator ausgebildet sein. Entsprechend kann das eingangsseitige kapazitive Element auch als Eingangskondensator bezeichnet werden. An das eingangsseitige kapazitive Element ist eine Eingangsspannung anschließbar oder anlegbar. Diese Eingangsspannung ist eine Gleichspannung. Somit können Anschlüsse des eingangsseitigen kapazitiven Elements als Eingangsanschlüsse der Stromrichterschaltung bezeichnet werden, wobei die Bezeichnung unabhängig von einer Richtung einer Leistungsübertragung durch die vorgeschlagene Stromrichterschaltung ist. An diese Eingangsanschlüsse ist z. B. eine Spannungsquelle oder ein Lastwiderstand anschließbar.

Weiter umfasst die Stromrichterschaltung mindestens ein ausgangsseitiges kapazitives Element, z. B. einen Kondensator. Somit kann das ausgangsseitige kapazitive Element auch als Ausgangskondensator bezeichnet werden. Anschlüsse des ausgangsseitigen kapazitiven Elements können als Ausgangsanschlüsse bezeichnet werden. An diesen Ausgangsschlüssen kann z. B. ein Wechselrichter, ein Energiespeicher, z. B. eine Batterie, oder ein Lastwiderstand angeschlossen werden. Wie nachfolgend näher erläutert ist eine Ausgangsspannung in einem zeitlichen Mittel etwa halb so groß wie die Eingangsspannung, wobei die Ausgangsspannung die über dem ausgangsseitigen kapazitiven Element anliegende oder abfallende Spannung ist.

Hierbei können einer der Eingangsanschlüsse und einer der Ausgangsanschlüsse auf einem gemeinsamen Potenzial liegen. So können z. B. ein Minuspol des eingangsseitigen kapazitiven Elements und ein Minuspol des ausgangsseitigen kapazitiven Elements auf einem gemeinsamen Bezugspotenzial, z. B. Masse, liegen.

Weiter umfasst die Stromrichterschaltung mindestens ein erstes, ein zweites, ein drittes und ein viertes Durchlasselement. Hierbei bezeichnet ein Durchlasselement ein Element, welches eine Durchlassrichtung und eine Sperrrichtung aufweist. Hierbei ist ein Widerstand für einen Stromfluss in Durchlassrichtung kleiner als ein Widerstand für den Stromfluss in Sperrrichtung. Somit kann das Durchlasselement Strom in der Durchlassrichtung passieren lassen und ein Stromfluss entgegen der Durchlassrichtung sperren. Dies schließt jedoch nicht aus, dass in Sperrrichtung ein von Null verschiedener Sperrstrom fließen kann. Vorzugsweise ist das Durchlasselement als Diode ausgebildet. Weiter umfasst die Stromrichterschaltung mindestens ein erstes und ein zweites Schaltelement. Das erste und das zweite Schaltelement können als elektronische Leistungsschalter ausgebildet sein, z. B. als IGBT oder als MOSFET. Es können jedoch auch Bipolartransistoren, GTO oder Siliziumkarbid-Schalter als erstes und zweites Schaltelement verwendet werden. Weiter umfasst die Stromrichterschaltung mindestens ein resonantes kapazitives Element und mindestens ein resonantes induktives Element, wobei die Begriffe "resonantes kapazitives Element" und "resonantes induktives Element" nur als Bezeichnung für ein kapazitives Element bzw. ein induktives Element dienen.

Das erste Durchlasselement, das zweite Durchlasselement, das dritte Durchlasselement und das vierte Durchlasselement sind gleichsinnig in Reihe geschaltet. Gleichsinnig bedeutet hierbei, dass in der Reihenschaltung die Durchlassrichtungen aller Durchlasselemente gleich orientiert sind. Ein durch die Reihenschaltung fließender Strom in Durchlassrichtung des ersten Durchlasselements fließt somit auch in die Durchlassrichtung aller weiteren Durchlasselemente. Die Reihenschaltung der vier Durchlasselemente ist parallel zu einem Schaltungszweig der Stromrichterschaltung geschaltet oder angeordnet, in welchem mindestens das eingangsseitige kapazitive Element angeordnet ist. Neben dem eingangsseitigen kapazitiven Element können noch weitere elektrische Elemente, z.B. induktive Elemente, in dem Schaltungszweig angeordnet sein. Es ist jedoch auch möglich, dass die Reihenschaltung der vier Durchlasselemente elektrisch parallel zu dem eingangsseitigen kapazitiven Element geschaltet ist. Hierbei können die Durchlasselemente z.B. derart geschaltet sein, dass die gemeinsame Durchlassrichtung von dem vorhergehend erwähnten gemeinsamen Bezugspotenzial weg orientiert ist. Jedoch ist auch die umgekehrte Anordnung der Durchlasselemente möglich.

Weiter ist das mindestens eine resonante kapazitive Element in mindestens einem Resonanzzweig angeordnet, wobei der mindestens eine Resonanzzweig parallel zu einem Schaltungszweig der Stromrichterschaltung geschaltet ist, in dem mindestens eine Reihenschaltung aus dem zweiten und dem dritten Durchlasselement angeordnet ist. Das resonante kapazitive Element kann auch als Resonanzkondensator bezeichnet werden und als Kondensator ausgeführt sein. Die Kapazität des resonanten kapazitiven Elements kann hierbei geringer als die Kapazität des eingangsseitigen kapazitiven Elements und/oder des ausgangsseitigen kapazitiven Elements sein. Weiter beträgt die Kapazität des resonanten kapazitiven Elements eine Größe in einem Bereich von 5 % bis 60 % einer Größe der Kapazität des eingangsseitigen kapazitiven Elements und/oder des ausgangsseitigen kapazitiven Elements.

Das ausgangsseitige kapazitive Element ist parallel zu einem Schaltungszweig der Stromrichterschaltung geschaltet, in dem mindestens eine Reihenschaltung aus dem dritten und dem vierten Durchlasselement angeordnet ist.

In einer Tiefsetzstellerkonfiguration sind das erste Schaltelement elektrisch parallel zu dem ersten Durchlasselement und das zweite Schaltelement elektrisch parallel zu dem zweiten Durchlasselement geschaltet. Weist das erste Schaltelement eine Durchlassrichtung auf, so ist das erste Schaltelement, welches z. B. als IGBT ausgebildet ist, antiparallel zu dem ersten Durchlasselement geschaltet. Entsprechend ist das zweite Schaltelement elektrisch antiparallel zu dem zweiten Durchlasselement geschaltet, falls das zweite Schaltelement eine Durchlassrichtung aufweist. Ein Betrieb der Stromrichterschaltung in der Tiefsetzstellerkonfiguration wird nachfolgend näher erläutert.

Alternativ ist in einer Hochsetzstellerkonfiguration das erste Schaltelement elektrisch parallel zu dem dritten Durchlasselement und das zweite Schaltelement elektrisch parallel zu dem vierten Durchlasselement geschaltet.

Je nach Anordnung der Schaltelemente ermöglicht die vorgeschlagene Stromrichterschaltung einen Betrieb als Tiefsetzsteller oder als Hochsetzsteller, was nachfolgend näher erläutert wird. Im Betrieb werden sich Spannungen in einem zeitlichen Mittel derart einstellen, dass die Ausgangsspannung in etwa die Hälfte der Eingangsspannung beträgt. Hierdurch ergibt sich in vorteilhafter Weise, dass die Schaltelemente, insbesondere falls diese als Halbleiterbauelemente ausgebildet sind, in ihrer Sperrspannung nur in etwa auf die Hälfte der Eingangsspannung ausgelegt werden müssen. Hierdurch können in vorteilhafter Weise Durchlassverluste verringert werden, da Durchlassverluste mit steigender Sperrfähigkeit des Schaltelements zunehmen. Weiter ergibt sich in vorteilhafter Weise, dass eine Induktivität des/der resonanten induktiven Elements/Elemente geringer als typischerweise in Stromrichterschaltungen verwendete Induktivitäten gewählt werden kann. Hierdurch ergeben sich geringere Verlustleistungen und eine verringerte Baugröße der Stromrichterschaltung, da aufgrund der geringen Induktivität des resonanten induktiven Elements auch eine Baugröße dieses induktiven Elements vergleichsweise gering ist.

Weiter ergibt sich in vorteilhafter Weise, dass die vorgeschlagene Stromrichterschaltung in einem so genannten Null-Strom-Schaltbetrieb und nicht in dem vorhergehend erläuterten hartschaltenden Betrieb betrieben werden kann. Dies wird nachfolgend näher erläutert. Somit ergeben sich verringerte Schaltverluste beim Schalten der Schaltelemente.

Insgesamt ergibt sich in vorteilhafter Weise ein hoher Wirkungsgrad der vorgeschlagenen Stromrichterschaltung.

In einer weiteren Ausführungsform umfasst der Stromrichter ein drittes Schaltelement und ein viertes Schaltelement, wobei das dritte Schaltelement und das vierte Schaltelement jeweils parallel, vorzugsweise antiparallel, zu den verbleibenden Durchlasselementen geschaltet sind. In diesem Fall ergibt sich also eine Stromrichterschaltung in der zu allen vier Durchlasselementen jeweils ein Schaltelement elektrisch parallel, vorzugsweise antiparallel, geschaltet ist. So ergibt sich eine Stromrichterschaltung, bei der zu dem ersten Durchlasselement ein erstes Schaltelement elektrisch parallel, vorzugsweise antiparallel, geschaltet ist. Zu dem zweiten Durchlasselement ist ein zweites Schaltelement elektrisch parallel, vorzugsweise antiparallel, geschaltet. Zu dem dritten Durchlasselement ist elektrisch parallel, vorzugsweise antiparallel, ein drittes Schaltelement geschaltet. Zu dem vierten Durchlasselement ist elektrisch parallel, vorzugsweise antiparallel, ein viertes Schaltelement geschaltet.

Hierdurch ergibt sich in vorteilhafter Weise, dass die vorgeschlagene Stromrichterschaltung sowohl als Tiefsetzsteller als auch als Hochsetzsteller betrieben werden kann. Hierbei ist die Eingangsspannung immer höher als die Ausgangsspannung, jedoch ist eine Richtung des Energieflusses umkehrbar. Dadurch arbeitet die vorgeschlagene Stromrichterschaltung bei einem Energiefluss von der Eingangsseite zur Ausgangsseite als Tiefsetzsteller, bei einem Energiefluss von der Ausgangsseite zur Eingangsseite als Hochsetzsteller.

In einer weiteren Ausführungsform ist das mindestens eine resonante induktive Element in einem Ladepfad und/oder in einem Entladepfad des resonanten kapazitiven Elements angeordnet. Der Ladepfad und der Entladepfad werden nachfolgend näher erläutert. Hierbei kann die Stromrichterschaltung mehr als ein resonantes induktives Element umfassen. Z. B. kann ein induktives Element oder können mehrere induktive Elemente in dem Ladepfad angeordnet sein. Alternativ oder kumulativ kann ein induktives Element oder können mehrere induktive Elemente in dem Entladepfad angeordnet sein.

Induktivitäten mehrerer induktiver Elemente können derart gewählt sein, dass eine Zeitdauer einer Halbschwingungsperiode eines ersten Resonanzpfades in etwa einer Zeitdauer einer Halbschwingungsperiode eines zweiten Resonanzpfades entspricht, wenn zumindest eines der induktiven Elemente ausschließlich im Ladepfad und ein weiteres induktives Element ausschließlich im Entladepfad angeordnet ist. Umfasst die Stromrichterschaltung jedoch nur ein resonantes induktives Element oder mehrere induktive Elemente, welche(s) in dem mindestens einen Resonanzzweig angeordnet ist/sind, so hängt das Verhältnis der Zeitdauern der Halbschwingungsperioden nur von den Kapazitätswerten des eingangsseitigen kapazitiven Elements und des ausgangsseitigen kapazitiven Elements ab.

Hierbei entspricht die Zeitdauer der Halbschwingungsperiode des ersten Resonanzpfades einem halben Kehrwert einer Resonanzfrequenz des ersten Resonanzpfades, wobei die Resonanzfrequenz des ersten Resonanzpfades in Abhängigkeit des eingangsseitigen kapazitiven Elements, des ausgangsseitigen kapazitiven Elements, des resonanten kapazitiven Elements und mindestens eines induktiven Elements bestimmt wird. Die Zeitdauer der Halbschwingungsperiode des zweiten Resonanzpfades entspricht dem halben Kehrwert der Resonanzfrequenz des zweiten Resonanzpfades, wobei die Resonanzfrequenz des zweiten Resonanzpfades in Abhängigkeit des ausgangsseitigen kapazitiven Elements, des resonanten kapazitiven Elements und mindestens eines induktiven Elements bestimmt wird. Hierbei entspricht in einer Tiefsetzstellerkonfiguration der Ladepfad dem ersten Resonanzpfad und der Entladepfad dem zweiten Resonanzpfad. In einer Hochsetzstellerkonfiguration entspricht der Ladepfad dem zweiten Resonanzpfad und der Entladepfad dem ersten Resonanzpfad. Dies wird nachfolgend näher erläutert.

In etwa kann hierbei bedeuten, dass eine Zeitdauer der Halbschwingungsperiode des ersten Resonanzpfades einer Zeitdauer aus einem Bereich eines 0,7fachen bis 1,3fachen der Zeitdauer der Halbschwingungsperiode des zweiten Resonanzpfades entsprechen kann.

Das mindestens eine resonante induktive Element dient hierbei dazu, dass sich ein Stromverlauf entsprechend einer Sinushalbschwingung einstellt, dessen Amplitude am Anfang der Halbschwingung gering oder Null ist, zeitlich nachfolgend ansteigt, ein Maximum aufweist und dann wieder auf einen geringen Stromwert oder Nullstrom absinkt. Durch die Verwendung des mindestens einen resonanten induktiven Elements kann also ein sinushalbschwingungsförmiger Verlauf des Ladestroms und/oder Entladestroms erzeugt werden. Dies wiederum kann in vorteilhafter Weise dazu genutzt werden, dass die vorhergehend beschriebenen Schaltelemente zu einem Zeitpunkt geschaltet werden, in welchem ein Ladestrom und/oder Entladestrom gering, vorzugsweise 0, ist. Hierdurch ergibt sich in vorteilhafter Weise ein in Bezug auf Schaltverluste quasi verlustloser Betrieb der Schaltelemente.

In einer bevorzugten Ausführungsform ist das mindestens eine resonante induktive Element in dem Resonanzzweig angeordnet. Hierbei ist das mindestens eine resonante induktive Element elektrisch in Reihe zu dem resonanten kapazitiven Element angeordnet. Der Resonanzzweig ist in jeder möglichen Betriebsart Teil des Ladepfades und des Entladepfades. Somit kann in vorteilhafter Weise durch ein einziges induktives Bauelement sowohl für den Ladevorgang als auch für den Entladevorgang des resonanten kapazitiven Elements ein Stromverlauf mit einer gewünschten Sinushalbschwingungsform hergestellt werden.

Es ist auch möglich, dass eine resultierende Stromrichterschaltung zwei oder mehr der vorgeschlagenen Stromrichterschaltungen umfasst, die elektrisch parallel geschaltet sind. Hierdurch lassen sich in vorteilhafter Weise übertragbare Leistungen erhöhen. Zudem reduzieren sich hierdurch eine Effektivstrombelastung der eingangsseitigen und der ausgangsseitigen kapazitiven Elemente, da Taktpulse von Schaltelementen der parallel geschalteten Stromrichterschaltungen gegeneinander versetzt werden können.

Es ist auch möglich, mindestens zwei der vorgeschlagenen Stromrichterschaltungen elektrisch in Reihe zu schalten. Hierdurch kann in vorteilhafter Weise eine Spannungskaskadierung erreicht werden. Werden z. B. zwei der vorgeschlagenen Stromrichterschaltungen elektrisch in Reihe geschaltet, so beträgt eine resultierende Ausgangsspannung in einem zeitlichen Mittel in etwa ein Viertel der Eingangsspannung.

Nachfolgende Erläuterungen beziehen sich auf einen Betrieb der vorgeschlagenen Stromrichterschaltung als Tiefsetzsteller.

Weiter vorgeschlagen wird ein Verfahren zur Steuerung von mindestens zwei Schaltelementen einer Stromrichterschaltung. Die Stromrichterschaltung ist hierbei in der vorhergehend erläuterten Tiefsetzstellerkonfiguration ausgebildet. Dies bedeutet, dass zumindest zu dem ersten Durchlasselement ein erstes Schaltelement elektrisch parallel, vorzugsweise antiparallel, und zu dem zweiten Durchlasselement elektrisch parallel, vorzugsweise antiparallel, ein weiteres Schaltelement geschaltet ist. Die Tiefsetzstellerkonfiguration kann jedoch auch bei einer Stromrichterschaltung gegeben sein, in der zu jedem Durchlasselement jeweils ein Schaltelement elektrisch parallel, vorzugsweise antiparallel, geschaltet ist. In der Tiefsetzstellerkonfiguration ist der Schaltungszweig, in dem das ausgangsseitige kapazitive Element angeordnet ist, elektrisch parallel zu der Reihenschaltung aus dem dritten und dem vierten Durchlasselement geschaltet.

In einem Ladevorgang wird das erste Schaltelement, also das zu dem ersten Durchlasselement parallel geschaltete Schaltelement, in einem Durchlasstakt des Schaltelements für eine Ladezeitdauer leitend geschaltet. Während dieses Durchlasstaktes dieses Schaltelements befinden sich die anderen verbleibenden Schaltelemente, also auch das weitere Schaltelement, in einem Sperrtakt und sind somit für die Ladezeitdauer sperrend geschaltet. In dem Ladevorgang fließt ein Ladestrom von dem eingangsseitigen kapazitiven Element zu dem resonanten kapazitiven Element. Hierbei steigt eine Spannung über dem resonanten kapazitiven Element und es wird Energie vom eingangsseitigen kapazitiven Element zum resonanten kapazitiven Element übertragen. In dem Ladevorgang fließt auch ein Strom durch das ausgangsseitige kapazitive Element, so dass auch dieses während des Ladevorgangs Energie aufnimmt.

In einem Entladevorgang wird in einem Durchlasstakt des weiteren Schaltelements das weitere Schaltelement, also das zu dem zweiten Durchlasselement parallel geschaltete Schaltelement, für eine vorbestimmte Entladezeitdauer leitend geschaltet. Entsprechend befinden sich während des Durchlasstaktes die anderen verbleibenden Schaltelemente, also auch das erste Schaltelement, in einem Sperrtakt und sind für die vorbestimmte Entladezeitdauer sperrend geschaltet. In dem Entladevorgang fließt ein Entladestrom vom resonanten kapazitiven Element zu dem ausgangsseit-tigen kapazitiven Element. Hierbei steigt eine Spannung über dem ausgangsseitigen kapazitiven Element und es wird Energie vom resonanten kapazitiven Element zum ausgangsseitigen Element übertragen.

Hierbei folgt der Entladevorgang dem Ladevorgang zeitlich nach. Insbesondere können Ladevorgang und Entladevorgang zeitlich alternierend aufeinander folgen, wobei ausschließlich eines der beiden Schaltelemente leitend geschaltet ist, während das andere der beiden Schaltelemente elektrisch sperrend geschaltet ist.

Der Begriff Laden in einem Ladevorgang bzw. der Begriff Entladen in einem Entladevorgang bezieht sich auf das resonante kapazitive Element.

Das vorgeschlagene Verfahren zur Steuerung der Stromrichterschaltung ermöglicht hiermit in vorteilhafter Weise einen Tiefsetzstellerbetrieb der vorgeschlagenen Stromrichterschaltung. Hierbei wird die Eingangsspannung in einem zeitlichen Mittel in etwa auf eine Hälfte der Eingangsspannung, die dann Ausgangsspannung ist, umgewandelt. Im Tiefsetzstellerbetrieb kann in diesem Fall elektrische Energie von dem auf der Eingangsseite angeordneten eingangsseitigen kapazitiven Element zu dem auf der Ausgangsseite angeordneten ausgangsseitigen kapazitiven Element transportiert werden.

In einer weiteren Ausführungsform entspricht in dem Ladevorgang die Zeitdauer des Durchlasstaktes einer Zeitdauer aus einem vorbestimmten Bereich um eine Zeitdauer einer Halbschwingungsperiode eines ersten Resonanzpfades herum. Diese Zeitdauer wurde vorhergehend definiert. Der erste Resonanzpfad umfasst hierbei also das eingangsseitige kapazitive Element, das ausgangsseitige kapazitive Element, das resonante kapazitive Element und mindestens ein induktives Element. Es können jedoch auch noch weitere elektrische und/oder elektronische Elemente, z.B. Schaltelemente oder Dioden, im ersten Resonanzpfad angeordnet sein. In der Tiefsetzstellerkonfiguration oder in einem Tiefsetzstellerbetrieb entspricht der erste Resonanzpfad dem vorhergehend erwähnten Ladepfad.

Z. B. kann die Zeitdauer des Durchlasstaktes in dem Ladevorgang einer Zeitdauer aus einem Bereich eines 0,7fachen bis 1,3fachen einer Zeitdauer einer Halbschwingungsperiode des ersten Resonanzpfades entsprechen. Es ist jedoch auch möglich, dass die Zeitdauer des Durchlasstaktes kürzer als ein minimaler Wert des angeführten Bereiches oder länger als ein maximaler Wert des angeführten Bereiches ist. Vorzugsweise entspricht die Zeitdauer des Durchlasstaktes in dem Ladevorgang genau der Zeitdauer der Halbschwingungsperiode des ersten Resonanzpfades.

Die Zeitdauer des Durchlasstaktes in dem Ladevorgang kann auch derart gewählt werden, dass beim Schalten des ersten Schaltelements am Ende des Durchlasstaktes in dem Ladevorgang, also beim Schalten von leitend auf sperrend, der Ladestrom kleiner als eine vorbestimmte Stromschwelle, beispielsweise kleiner als ein Viertel eines vorhergehenden Maximalwertes des Ladestroms, oder Null ist. Weiterhin entspricht in dem Entladevorgang die Zeitdauer des Durchlasstaktes des weiteren Schaltelements einer Zeitdauer aus einem vorbestimmten Bereich um eine Zeitdauer einer Halbschwingungsperiode eines zweiten Resonanzpfades herum. Diese Zeitdauer wurde vorhergehend definiert. Der zweite Resonanzpfad umfasst hierbei das ausgangsseitige kapazitive Element, das resonante kapazitive Element und ein induktives Element, jedoch nicht das eingangsseitige kapazitive Element. Hierbei kann das induktive Element des zweiten Resonanzpfades gleich dem induktiven Element des ersten Resonanzpfades sein. Auch kann ein induktives Element oder können mehrere induktive Elemente des ersten Resonanzpfades gleich einem induktiven Element oder mehreren induktiven Elementen des zweiten Resonanzpfades sein. Es können auch noch weitere elektrische und/oder elektronische Elemente, z.B. Schaltelemente oder Dioden, jedoch nicht das eingangsseitige kapazitive Element, im zweiten Resonanzpfad angeordnet sein. In der Tiefsetzstellerkonfiguration oder in einem Tiefsetzstellerbetrieb entspricht der zweite Resonanzpfad dem vorhergehend erwähnten Entladepfad.

Die Zeitdauer des Durchlasstaktes des weiteren Schaltelements in dem Entladevorgang kann z. B. einer Zeitdauer aus einem Bereich eines 0,7fachen bis 1,3fachen der Zeitdauer der Halbschwingungsperiode des zweiten Resonanzpfades entsprechen, allerdings kann die Zeitdauer des Durchlasstaktes auch kürzer als ein minimaler Wert des Bereiches oder länger als ein maximaler Wert des Bereiches sein. Vorzugsweise entspricht die Zeitdauer des Durchlasstaktes in dem Entladevorgang genau der Zeitdauer der Halbschwingungsperiode des zweiten Resonanzpfades.

Die Zeitdauer in dem Entladevorgang kann auch derart gewählt werden, dass beim Schalten des weiteren Schaltelements am Ende des Durchlasstaktes des Entladevorgangs, also beim Schalten von leitend auf sperrend, der Entladestrom kleiner als eine vorbestimmte Stromschwelle, beispielsweise kleiner als ein Viertel eines vorhergehenden Maximalwertes des Entladestroms, oder Null ist.

Vorzugsweise entspricht ein Puls-Pause-Verhältnis des Schaltelements, welches in dem Ladevorgang leitend geschaltet ist, einem Verhältnis der Zeitdauer der Halbschwingungsperiode des ersten Resonanzpfades zu der Zeitdauer der Halbschwingungsperiode des zweiten Resonanzpfades. In diesem Fall kann eine Taktperiode dieses Schaltelements gleich der Summe der Zeitdauer der Halbschwingungsperiode des ersten Resonanzpfades und der Zeitdauer der Halbschwingungsperiode des zweiten Resonanzpfades sein. Da jedoch die Zeitdauer des Durchlasstaktes in dem Ladevorgang auch kürzer oder länger als die Zeitdauer der Halbschwingungsperiode des ersten Resonanzpfades sein kann, können sich entsprechend andere Puls-Pause-Verhältnisse ergeben.

Entsprechende Ausführungen gelten für ein Puls-Pause-Verhältnis des Schaltelements, welches während des Entladevorgangs leitend geschaltet ist. Insbesondere kann ein Puls-Pause-Verhältnis dieses Schaltelements einem Verhältnis der Zeitdauer der Halbschwingungsperiode des zweiten Resonanzpfades zu der Zeitdauer der Halbschwingungsperiode des ersten Resonanzpfades entsprechen.

Die Summe der Puls- und Pausenzeiten muss hierbei für beide Schaltelemente gleich sein, da zu keinem Zeitpunkt beide Schaltelemente leitend geschaltet sein dürfen.

Hierdurch ergibt sich in vorteilhafter Weise, dass ein Umschalten der Schaltelemente, also ein Schalten von leitend zu sperrend oder ein Schalten von sperrend zu leitend nur dann erfolgt, wenn ein Lade- oder Entladestrom, der aufgrund des induktiven Elements oder der induktiven Elemente einen sinushalbschwingungsförmigen Verlauf aufweist, bereits gering ist. Hierdurch können Schaltverluste reduziert werden.

Nachfolgende Erläuterungen beziehen sich auf einen Betrieb der vorgeschlagenen Stromrichterschaltung als Hochsetzsteller.

Weiter vorgeschlagen wird ein Verfahren zur Steuerung von mindestens zwei Schaltelementen einer Stromrichterschaltung. Hierbei ist die Stromrichterschaltung in einer Hochsetzstellerkonfiguration ausgebildet. Dies bedeutet, dass zumindest zu dem dritten Durchlasselement ein erstes elektrisches Schaltelement parallel, vorzugsweise antiparallel, und zu dem vierten Durchlasselement ein weiteres Schaltelement elektrisch parallel, vorzugsweise antiparallel, geschaltet ist. Eine Stromrichterschaltung kann jedoch auch dann in der Hochsetzstellerkonfiguration ausgebildet sein, falls zu jedem der vier Durchlasselemente jeweils ein Schaltelement elektrisch parallel, vorzugsweise antiparallel, geschaltet ist. Hierbei ist ein Schaltungszweig, in dem das ausgangsseitige kapazitive Element angeordnet ist, wiederum elektrisch parallel zu der Reihenschaltung aus dem dritten und den vierten Durchlasselement geschaltet.

In einem Ladevorgang wird das weitere Schaltelement, also das zu dem vierten Durchlasselement parallel geschaltete Schaltelement, in einem Durchlasstakt des Schaltelements für eine Ladezeitdauer leitend geschaltet. Entsprechend den Ausführungen zur Tiefsetzstellerkonfiguration sind während des Durchlasstaktes des Schaltelements die anderen verbleibenden Schaltelemente, also auch das erste Schaltelement, elektrisch sperrend geschaltet. In dem Ladevorgang fließt ein Ladestrom von dem ausgangsseitigen kapazitiven Element zu dem resonanten kapazitiven Element. Hierbei wird Energie vom ausgangsseitigen kapazitiven Element zum resonanten kapazitiven Element übertragen.

Weiter wird in einem Entladevorgang das erste Schaltelement, also das zu dem dritten Durchlasselement parallel geschaltete Schaltelement, in einem Durchlasstakt des Schaltelements für eine vorbestimmte Entladezeitdauer leitend geschaltet. Hierbei befinden sich die anderen verbleibenden Schaltelemente, also auch das weitere Schaltelement, in einem Sperrtakt und sind somit elektrisch sperrend geschaltet. In dem Entladevorgang fließt ein Entladestrom von dem resonanten kapazitiven Element zu dem eingangsseitigen kapazitiven Element. Hierbei wird Energie sowohl vom resonanten kapazitiven Element als auch vom ausgangsseitigen kapazitiven Element an das eingangsseitige kapazitive Element übertragen.

Dieses Verfahren ermöglicht in vorteilhafter Weise eine Steuerung der Stromrichterschaltung derart, dass diese sich in einem Hochsetzstellerbetrieb befindet. Auch hierbei beträgt die Ausgangsspannung in einem zeitlichen Mittel in etwa die Hälfte der Eingangsspannung. Im Hochsetzstellerbetrieb kann elektrische Energie von dem auf der Ausgangsseite angeordneten ausgangsseitigen kapazitiven Element zu dem auf der Eingangsseite angeordneten eingangsseitigen kapazitiven Element transportiert werden.

In einer weiteren Ausführungsform entspricht in dem Ladevorgang die Zeitdauer des Durchlasstaktes einer Zeitdauer aus einem vorbestimmten Bereich um eine Zeitdauer einer Halbschwingungsperiode eines zweiten Resonanzpfades herum. Diese Zeitdauer und der zweite Resonanzpfad wurden vorhergehend erläutert. In der Hochsetzstellerkonfiguration oder in einem Hochsetzstellerbetrieb entspricht der zweite Resonanzpfad dem vorhergehend erwähnten Ladepfad.

Z. B. kann die Zeitdauer des Durchlasstaktes in dem Ladevorgang einer Zeitdauer aus einem Bereich eines 0,7fachen bis 1,3fachen einer Zeitdauer einer Halbschwingungsperiode des zweiten Resonanzpfades entsprechen. Es ist jedoch auch möglich, dass die Zeitdauer des Durchlasstaktes kürzer als ein minimaler Wert des angeführten Bereiches oder länger als ein maximaler Wert des angeführten Bereiches ist. Vorzugsweise entspricht die Zeitdauer des Durchlasstaktes in dem Ladevorgang genau der Zeitdauer der Halbschwingungsperiode des zweiten Resonanzpfades.

Die Zeitdauer in dem Ladevorgang kann auch derart gewählt werden, dass beim Schalten des weiteren Schaltelements am Ende des Durchlasstaktes des Ladevorgangs, also beim Schalten von leitend auf sperrend, der Ladestrom kleiner als eine vorbestimmte Stromschwelle, beispielsweise kleiner als ein Viertel eines vorhergehenden Maximalwertes des Entladestroms, oder Null ist.

Weiterhin entspricht in dem Entladevorgang die Zeitdauer des Durchlasstaktes einer Zeitdauer aus einem vorbestimmten Bereich um eine Zeitdauer einer Halbschwingungsperiode eines ersten Resonanzpfades herum. Diese Zeitdauer und der erste Resonanzpfad wurden vorhergehend erläutert. In der Hochsetzstellerkonfiguration oder in einem Hochsetzstellerbetrieb entspricht der erste Resonanzpfad dem vorhergehend erwähnten Entladepfad.

Die Zeitdauer des Durchlasstaktes in dem Entladevorgang kann z. B. einer Zeitdauer aus einem Bereich eines 0,7fachen bis 1,3fachen der Zeitdauer der Halbschwingungsperiode des ersten Resonanzpfades entsprechen, allerdings kann die Zeitdauer des Durchlasstaktes auch kürzer als ein minimaler Wert des Bereiches oder länger als ein maximaler Wert des Bereiches sein. Vorzugsweise entspricht die Zeitdauer des Durchlasstaktes in dem Entladevorgang genau der Zeitdauer der Halbschwingungsperiode des ersten Resonanzpfades.

Die Zeitdauer in dem Entladevorgang kann auch derart gewählt werden, dass beim Schalten des ersten Schaltelements am Ende des Durchlasstaktes des Entladevorgangs, also beim Schalten von leitend auf sperrend, der Entladestrom kleiner als eine vorbestimmte Stromschwelle, beispielsweise kleiner als ein Viertel eines vorhergehenden Maximalwertes des Entladestroms, oder Null ist.

Vorzugsweise entspricht ein Puls-Pause-Verhältnis des Schaltelements, welches in dem Ladevorgang leitend geschaltet ist, einem Verhältnis der Zeitdauer der Halbschwingungsperiode des zweiten Resonanzpfades zu der Zeitdauer der Halbschwingungsperiode des ersten Resonanzpfades. In diesem Fall kann eine Taktperiode dieses Schaltelements gleich der Summe der Zeitdauer der Halbschwingungsperiode des zweiten Resonanzpfades und der Zeitdauer der Halbschwingungsperiode des ersten Resonanzpfades sein. Da jedoch die Zeitdauer des Durchlasstaktes in dem Ladevorgang auch kürzer oder länger als die Zeitdauer der Halbschwingungsperiode des zweiten Resonanzpfades sein kann, können sich entsprechend andere Puls-Pause-Verhältnisse ergeben.

Entsprechende Ausführungen gelten für ein Puls-Pause-Verhältnis des Schaltelements, welches während des Entladevorgangs leitend geschaltet ist. Insbesondere kann ein Puls-Pause-Verhältnis dieses Schaltelements einem Verhältnis der Zeitdauer der Halbschwingungsperiode des ersten Resonanzpfades zu der Zeitdauer der Halbschwingungsperiode des zweiten Resonanzpfades entsprechen.

Die Summe der Puls- und Pausenzeiten muss wiederum für beide Schaltelemente gleich sein, da zu keinem Zeitpunkt beide Schaltelemente leitend geschaltet sein dürfen.

Hierdurch ergibt sich in vorteilhafter Weise, dass ein Umschalten der Schaltelemente, also ein Schalten von leitend zu sperrend oder ein Schalten von sperrend zu leitend nur dann erfolgt, wenn ein Lade- oder Entladestrom, der aufgrund des induktiven Elements oder der induktiven Elemente einen sinushalbschwingungsförmigen Verlauf aufweist, bereits gering ist. Hierdurch können Schaltverluste reduziert werden.

Die nachfolgenden Ausführungen gelten sowohl für den Tiefsetzstellerbetrieb als auch für den Hochsetzstellerbetrieb

Weiter können das mindestens eine induktive Element des ersten Resonanzpfades gleich dem mindestens einen induktiven Element des zweiten Resonanzpfades sein. Umfassen der erste und/oder der zweite Resonanzpfad jeweils mehrere induktive Elemente, so kann eines dieser induktiven Elemente oder können mehrere dieser induktiven Elemente sowohl im ersten als auch im zweiten Resonanzpfad angeordnet sein.

In einer alternativen Ausführungsform beträgt ein Puls-Pause-Verhältnis einer Ansteuerung der Schaltelemente Eins. Hierbei sind natürlich Ungenauigkeiten, z.B. aufgrund von Toleranzen, bei der Ansteuerung der Schaltelemente zu berücksichtigen. Somit entspricht für ein Schaltelement die Zeitdauer des Durchlasstaktes der Zeitdauer des Sperrtaktes dieses Schaltelements. Wie vorhergehend erläutert, kann die Zeitdauer des Durchlasstaktes einer Zeitdauer aus einem vorbestimmten Bereich um eine Zeitdauer einer Halbschwingungsperiode eines ersten Resonanzpfades bzw. eines zweiten Resonanzpfades herum entsprechen.

In einer alternativen Ausführungsform wird ein Momentanwert des Ladestroms oder Entladestroms erfasst, wobei eine Ansteuerung der Schaltelemente in Abhängigkeit des aktuellen Momentanwertes erfolgt. Der Ladestrom und Entladestrom fließt hierbei jeweils durch den Resonanzzweig. Hierbei kann eine von dem aktuellen Momentanwert abhängige Schaltbedingung ausgewertet werden, wobei ein Schaltelement leitend oder sperrend geschaltet wird, wenn die Schaltbedingung erfüllt ist.

Beispielsweise kann ein Schaltelement von leitend auf sperrend geschaltet werden, wenn der Ladestrom bzw. der Entladestrom kleiner als eine vorbestimmte Stromschwelle wird. Auch ist möglich, dass ein Schaltelement von leitend auf sperrend geschaltet wird, wenn der Ladestrom bzw. der Entladestrom unter eine vorbestimmte Stromschwelle sinkt oder den Wert Null annimmt und der Ladestrom bzw. der Entladestrom zeitlich vorhergehend ein Maximum aufwies. Auch kann ein Schaltelement von leitend auf sperrend geschaltet wird, wenn der Ladestrom bzw. Entladestrom über eine vorbestimmte Stromschwelle steigt und zeitlich nachfolgend unter eine weitere vorbestimmte Stromschwelle absinkt. Hierbei kann das weitere Schaltelement, welches in dem jeweiligen Betrieb, also im Hochsetzstellerbetrieb oder im Tiefsetzstellebetrieb als nächstes geschaltet wird, bei Erfüllen der Schaltbedingung sofort oder erst nach einer bestimmten Zeitdauer von elektrisch sperrend auf elektrisch leitend schalten. Z.B. ist möglich, dass nach dem Absinken unter die vorbestimmte Stromschwelle oder die weitere vorbestimmte Stromschwelle ein Schaltvorgang erst nach einer vorbestimmten Zeitdauer erfolgt. Hierdurch ergibt sich in vorteilhafter Weise eine adaptive Anpassung einer Zeitdauer von Durchlasstakten in Abhängigkeit eines Momentanwerts des Ladestroms bzw. des Entladestroms. Durch eine Anpassung, insbesondere eine Verkürzung der Durchlasstakte kann eine durch die Stromrichterschaltung übertragene Leistung erhöht werden.

Die Erfindung wird anhand mehrerer Ausführungsbeispiele näher erläutert. Die Figuren zeigen:

Fig. 1     ein schematisches Schaltbild einer Stromrichterschaltung in einer ersten Ausführungsform,
Fig. 2     ein schematisches Schaltbild einer Stromrichterschaltung in einer zweiten Ausführungsform,
Fig. 3     ein schematisches Schaltbild einer Stromrichterschaltung in einer dritten Ausführungsform,
Fig. 4     ein schematisches Schaltbild einer Stromrichterschaltung mit mehreren resonanten induktiven Elementen,
Fig. 5     ein schematisches Schaltbild einer Stromrichterschaltung mit zwei resonanten induktiven Elementen,
Fig. 6     ein schematisches Schaltbild einer weiteren Stromrichterschaltung mit zwei resonanten induktiven Elementen,
Fig. 7     eine schematische Darstellung einer Taktung von Schaltelementen in einem Tiefsetzstellerbetrieb,
Fig. 8     eine schematische Taktung von Schaltelementen in einem Hochsetzstellerbetrieb,

Fig. 9a    ein erster Stromverlauf in einem Resonanzzweig,

Fig. 9b    ein zweiter Stromverlauf in einem Resonanzzweig,

Fig. 9c    ein dritter Stromverlauf in einem Resonanzzweig,

Fig. 9d    ein vierter Stromverlauf in einem Resonanzzweig und

Fig. 10    ein schematisches Schaltbild einer Stromrichterschaltung in einer weiteren Ausführungsform.

Nachfolgend bezeichnen gleiche Bezugszeichen Elemente mit gleichen oder ähnlichen technischen Merkmalen.

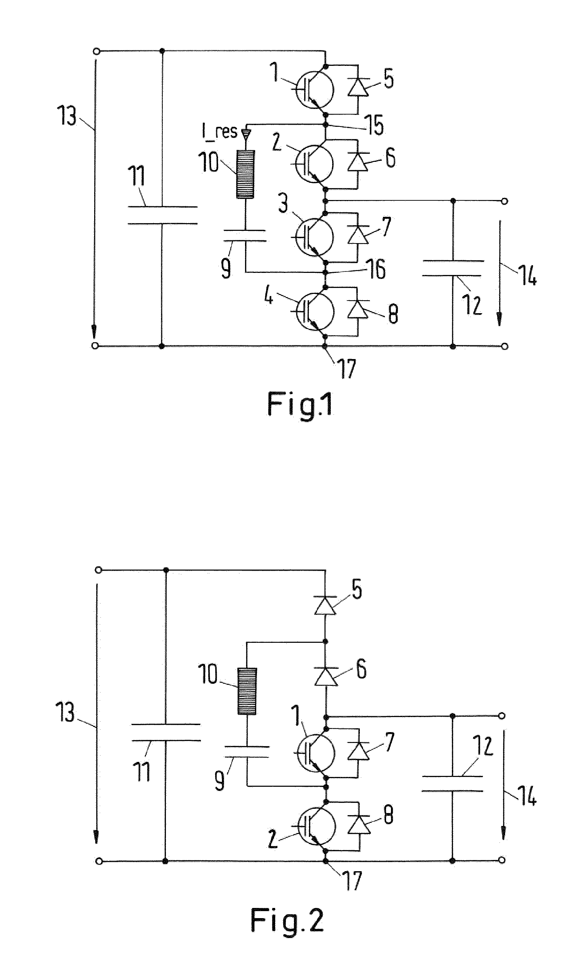

Fig. 1 zeigt ein schematisches Schaltbild einer Stromrichterschaltung in einer ersten Ausführungsform. Die Stromrichterschaltung umfasst ein erstes Schaltelement 1, ein zweites Schaltelement 2, ein drittes Schaltelement 3 und ein viertes Schaltelement 4. Die Schaltelemente 1, 2, 3, 4 können z.B. als Bipolartransistoren, insbesondere als IGBTs, ausgebildet sein. Die Schaltelemente 1, 2, 3, 4 sind hierbei gleichsinnig in Reihe geschaltet. Weiter umfasst die Stromrichterschaltung eine erste Diode 5, eine zweite Diode 6, eine dritte Diode 7 und eine vierte Diode 8. Die Dioden 5, 6, 7, 8 sind hierbei ebenfalls gleichsinnig in Reihe geschaltet. Hierbei ist die erste Diode 5 antiparallel zum ersten Schaltelement 1 geschaltet. Die zweite Diode 6 ist antiparallel zum zweiten Schaltelement 2 geschaltet. Die dritte Diode 7 ist antiparallel zum dritten Schaltelement 3 geschaltet. Die vierte Diode 8 ist antiparallel zum vierten Schaltelement 4 geschaltet. Weiter umfasst die Stromrichterschaltung einen Resonanzkondensator 9 und eine Resonanzdrossel 10. Der Resonanzkondensator 9 und die Resonanzdrossel 10 sind hierbei elektrisch in Reihe geschaltet. Die Reihenschaltung der Resonanzdrossel 10 und des Resonanzkondensators 9 ist hierbei elektrisch parallel zu einer Reihenschaltung des zweiten Durchlasselements 6 und des dritten Durchlasselements 7 geschaltet. In Fig. 1 ist dargestellt, dass ein den Resonanzkondensator 9 und die Resonanzdrossel 10 umfassender Brückenzweig von einem Verbindungspunkt 15 der Parallelschaltung des ersten Schaltelements 1 und der ersten Diode 5 mit der Parallelschaltung des zweiten Schaltelements 2 und der zweiten Diode 6 abzweigt und diesen Verbindungspunkt 15 mit einem Verbindungspunkt 16 der Parallelschaltung des dritten Schaltelements 3 mit der dritten Diode 7 und der Parallelschaltung des vierten Schaltelements 4 mit der vierten Diode 8 verbindet. Dieser Brückenzweig kann auch als Resonanzzweig bezeichnet werden. Weiter dargestellt ist ein Eingangskondensator 11. Dieser ist elektrisch parallel zu der Reihenschaltung der Dioden 5, 6, 7, 8 geschaltet. Auch dargestellt ist ein Ausgangskondensator 12, der elektrisch parallel zu der Reihenschaltung der dritten Diode 7 und der vierten Diode 8 geschaltet ist. Hierbei ist dargestellt, dass ein Anschluss des Eingangskondensators 11, ein Fußpunkt 17 der Reihenschaltung der Dioden 5, 6, 7, 8 und ein Anschluss des Ausgangskondensators 12 auf einem gemeinsamen Potential liegen. Über dem Eingangskondensator 11 fällt eine Eingangsspannung 13 ab. Über dem Ausgangskondensator 12 fällt eine Ausgangsspannung 14 ab. Die in Fig. 1 dargestellte Stromrichterschaltung kann in einem Tiefsetzstellerbetrieb, in welchem elektrische Energie von dem Eingangskondensator 11 in den Ausgangskondensator 12 transportiert wird, betrieben werden. Auch ist möglich, den in Fig. 1 dargestellten Stromrichter in einem Hochsetzstellerbetrieb zu betreiben, in welchem elektrische Energie von dem Ausgangskondensator 12 in den Eingangskondensator 11 transportiert wird.

Weiter ist in Fig. 1 ein Resonanzstrom I_res dargestellt. Dieser Resonanzstrom I_res stellt in einem Ladebetrieb einen Ladestrom des Resonanzkondensators 9 und in einem Entladebetrieb einen Entladestrom des Resonanzkondensators 9 dar. Der Resonanzstrom I_res im Resonanzzweig setzt sich aus einer Abfolge von zwei unterschiedlichen aufeinander folgenden Halbschwingungen zusammen. Eine erste Halbschwingung entsteht, wenn der Resonanzkondensator 9 durch entsprechende Schaltzustände der Schaltelemente 1, 2, 3, 4 mit dem Ausgangskondensator 12 in einem Stromkreis elektrisch verbunden wird, wobei der Eingangskondensator 11 nicht in diesem Stromkreis angeordnet ist.

In einem Tiefsetzstellerbetrieb wird ein solcher Zustand beispielsweise erreicht, wenn das zweite Schaltelement 2 leitend und alle verbleibenden Schaltelemente 1, 3, 4 sperrend geschaltet sind. In diesem Fall fließt der Resonanzstrom I_res im zweiten Resonanzpfad, der in diesem Fall dem Entladepfad entspricht. In einem Hochsetzstellerbetrieb wird ein solcher Zustand erreicht, wenn das vierte Schaltelement 4 leitend und alle verbleibenden Schaltelemente 1, 2, 3 sperrend geschaltet sind. Auch in diesem Fall fließt der Resonanzstrom I_res im zweiten Resonanzpfad, der in diesem Fall dem Ladepfad entspricht.

Eine zweite Halbschwingung entsteht, wenn der Resonanzkondensator 9 durch entsprechende Schaltzustände der Schaltelemente 1, 2, 3, 4 zum Ausgangskondensator 12 und zum Eingangskondensator 11 in Reihe geschaltet ist, wobei der Resonanzkondensator 9, der Ausgangskondensator 12 und der Eingangskondensator 11 in einem Stromkreis angeordnet sind.

In einem Tiefsetzstellerbetrieb wird ein solcher Zustand beispielsweise erreicht, wenn das erste Schaltelement 1 leitend und alle verbleibenden Schaltelemente 2, 3, 4 sperrend geschaltet sind. In diesem Fall fließt der Resonanzstrom I_res im ersten Resonanzpfad, der in diesem Fall dem Ladepfad entspricht. In einem Hochsetzstellerbetrieb wird ein solcher Zustand erreicht, wenn das dritte Schaltelement 3 leitend und alle verbleibenden Schaltelemente 1, 2, 4 sperrend geschaltet sind. Auch in diesem Fall fließt der Resonanzstrom I_res im ersten Resonanzpfad, der in diesem Fall dem Entladepfad entspricht.

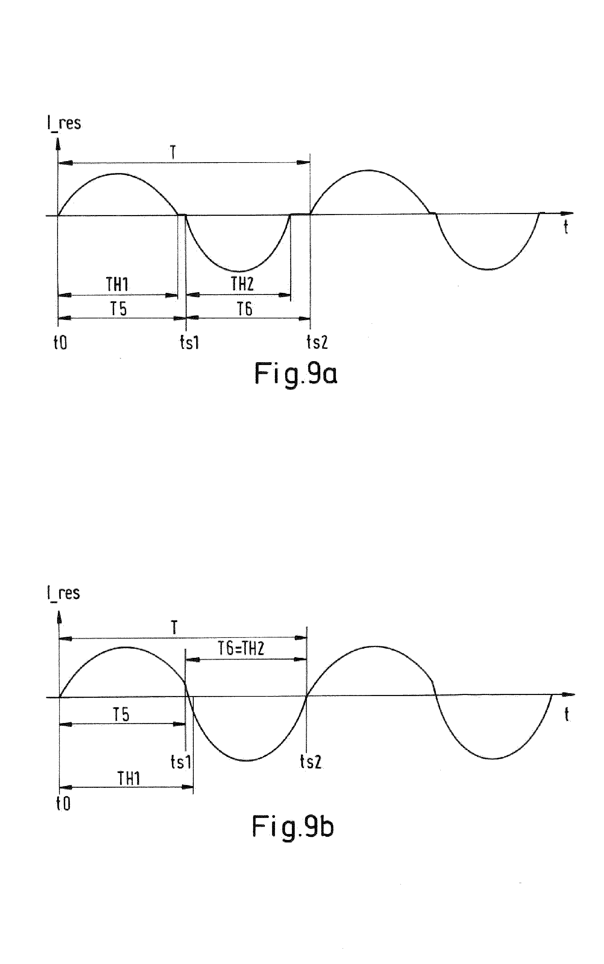

Nachfolgend wird exemplarisch ein Tiefsetzstellerbetrieb der Stromrichterschaltung erläutert. An einem Anfangszeitpunkt t0 (siehe z. B. Fig. 9a) ist eine Spannung über dem Resonanzkondensator 9 größer als die Ausgangsspannung 14. Wird nun das zweite Schaltelement 2 leitend geschaltet, so fließt ein Entladestrom von dem Resonanzkondensator 9 durch die Resonanzdrossel 10, das zweite Schaltelement 2, in den Ausgangskondensator 12. Der Stromkreis schließt sich hierbei über den Ausgangskondensator 12 und über die vierte Diode 8. Aufgrund der Resonanzdrossel 10 wird ein zeitlicher Verlauf des Entladestroms in Form einer Sinusschwingung erfolgen. Die Dauer der ersten Halbschwingung beträgt hierbei

$$TH1 = \pi * sqrt (L10* (1/(1/C9+1/C12))) \qquad \text{Formel 1,}$$

wobei TH1 die Dauer der ersten Halbschwingung, L10 eine Induktivität der Resonanzdrossel 10, C9 eine Kapazität des Resonanzkondensators 9 und C12 eine Kapazität des Ausgangskondensators 12 bezeichnet. Nach Ablauf der ersten Halbschwingung kann das zweite Schaltelement 2 sperrend geschaltet werden.

Eine zweite Halbschwingung erfolgt, falls nun das erste Schaltelement 1 leitend geschaltet wird. In diesem Fall liegt eine Reihenschaltung des Resonanzkondensators 9, des Ausgangskondensators 12, der Resonanzdrossel 10 und des Eingangskondensators 11 vor. Ist die Eingangsspannung 13 größer als die Summe der Spannung über dem Resonanzkondensator 9 und der Ausgangsspannung 14, so fließt ein Ladestrom vom Eingangskondensator 11 über das erste Schaltelement 1 und die Resonanzdrossel 10 in den Resonanzkondensator 9. Der Stromkreis schließt sich über die dritte Diode 7 und den Ausgangskondensator 12. Entsprechend Formel 2 beträgt eine Zeitdauer der zweiten Halbschwingung

$$TH2 = \pi*sqrt(L10*(1/(1/C9+1/C12+1/C11))) \qquad \text{Formel 2,}$$

wobei TH2 die Zeitdauer der zweiten Halbschwingung bezeichnet und C11 eine Kapazität des Eingangskondensators 11 bezeichnet. Hierbei ist ersichtlich, dass die Zeitdauer TH2 der zweiten Halbschwingung immer geringer als die Zeitdauer TH1 der ersten Halbschwingung ist.

Durch die ständigen Lade- und Entladeströme in Halbsinusschwingungsform findet eine Angleichung der Spannungen 13, 14 statt, wobei sich ein Spannungsgleichgewicht derart einstellt, dass die Ausgangsspannung 14 in etwa die Hälfte der Eingangsspannung 13 beträgt.

Nach Ablauf der zweiten Halbschwingung ist ein Zyklus beendet und ein neuer Zyklus kann von vorne beginnen. Eine Periodendauer T (siehe z. B. Fig. 9a) einer Pulsung für die Schaltelemente 1, 2, 3, 4 entspricht einer Zykluszeit und kann daher näherungsweise gleich einer Summe der Zeitdauer TH1 der ersten Halbschwingung und der Zeitdauer TH2 der zweiten Halbschwingung gewählt werden:

$$T \approx TH1 + TH2 \qquad \text{Formel 3.}$$

Es ist jedoch nicht erforderlich, dass die Periodendauer T genau gleich der Summe der Zeitdauern TH1, TH2 der Halbschwingungen ist. Ist die Periodendauer T z. B. größer als die Summe, so entsteht eine Pause, in der kein Lade- oder Entladestrom fließt. Ist die Periodendauer T z. B. kürzer als die Summe, dann kann z. B. die zweite Halbschwingung bereits beginnen, bevor die erste Halbschwingung beendet ist. Auch dies ist ein zulässiger Betriebszustand. Vorzugsweise ist jedoch eine Zeitdauer eines Durchlasstaktes der Schaltelemente 1, 2, 3, 4 derart zu wählen, dass diese mindestens der Zeitdauer TH1 der ersten Halbschwingung bzw. der Zeitdauer TH2 der zweiten Halbschwingung entsprechen. In diesem Fall kann nämlich der Ladestrom bzw. der Entladestrom beim Schalten der Schaltelemente 1, 2, 3, 4 null oder ungefähr null werden, wodurch sich Schaltverluste beim Schalten der Schaltelemente 1, 2, 3, 4 reduzieren.

Somit wird im Tiefsetzstellerbetrieb der in Fig. 1 dargestellten Schaltung in einem Ladevorgang das erste Schaltelement 1 leitend geschaltet, während in einem Entladevorgang das zweite Schaltelement 2 leitend geschaltet wird. Entsprechend wird im Hochsetzstellerbetrieb in einem Ladevorgang das vierte Schaltelement 4 leitend geschaltet. In einem Entladevorgang wird das dritte Schaltelement 3 leitend geschaltet.

Ist die Ausgangsspannung 14 kleiner als eine Hälfte der Eingangsspannung 13, so wird Tiefsetzstellerbetrieb aktiviert. Anderenfalls wird ein Hochsetzstellerbetrieb aktiviert.

In Fig. 2 ist eine zweite Ausführungsform einer Stromrichterschaltung dargestellt. Die in Fig. 2 dargestellte Stromrichterschaltung stellt eine Stromrichterschaltung in einer Hochsetzstellerkonfiguration dar und kann ausschließlich in einem Hochsetzstellerbetrieb betrieben werden. Im Unterschied zu Fig. 1 sind hier bei der ersten Diode 5 und der zweiten Diode 6 keine Schaltelemente parallel geschaltet. Somit sind ausschließlich der dritten Diode 7 ein erstes Schaltelement 1 und der vierten Diode 8 ein zweites Schaltelement 2 jeweils elektrisch antiparallel geschaltet. Hierbei entspricht das erste Schaltelement 1 dem in Fig. 1 dargestellten dritten Schaltelement 3 und das zweite Schaltelement 2 dem in Fig. 1 dargestellten vierten Schaltelement 4.

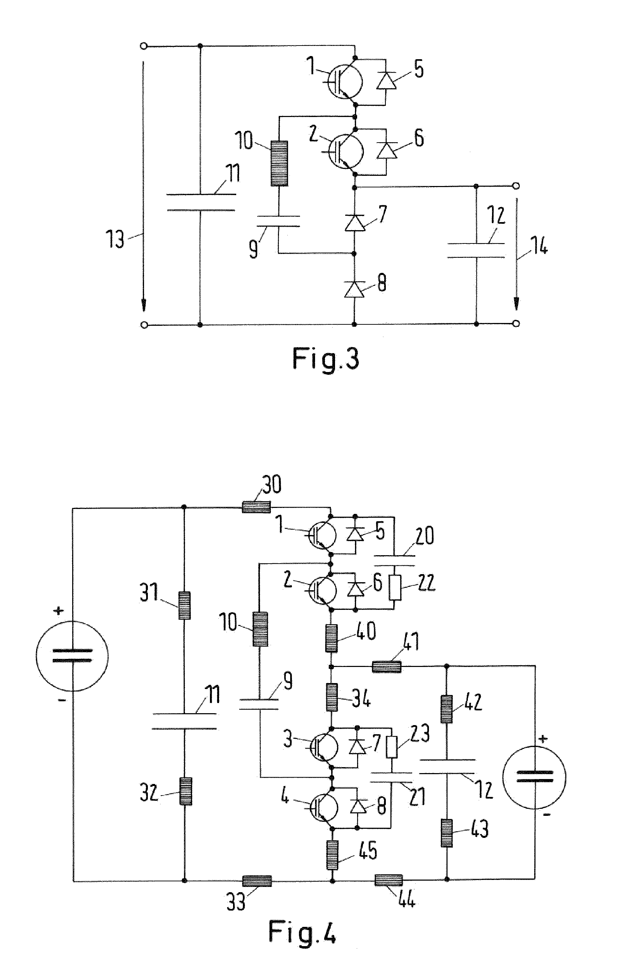

In Fig. 3 ist eine dritte Ausführungsform einer Stromrichterschaltung dargestellt. Diese Stromrichterschaltung stellt eine Stromrichterschaltung in einer Tiefsetzstellerkonfiguration dar und kann ausschließlich in einem Tiefsetzstellerbetrieb betrieben werden. Im Unterschied zu der in Fig. 1 dargestellten Stromrichterschaltung sind hierbei der dritten Diode 7 kein drittes Schaltelement 3 und der vierten Diode 8 kein viertes Schaltelement 4 elektrisch parallel geschaltet. Somit ist ausschließlich der ersten Diode 5 ein erstes Schaltelement 1 und der zweiten Diode 6 ein zweites Schaltelement 2 elektrisch antiparallel geschaltet.

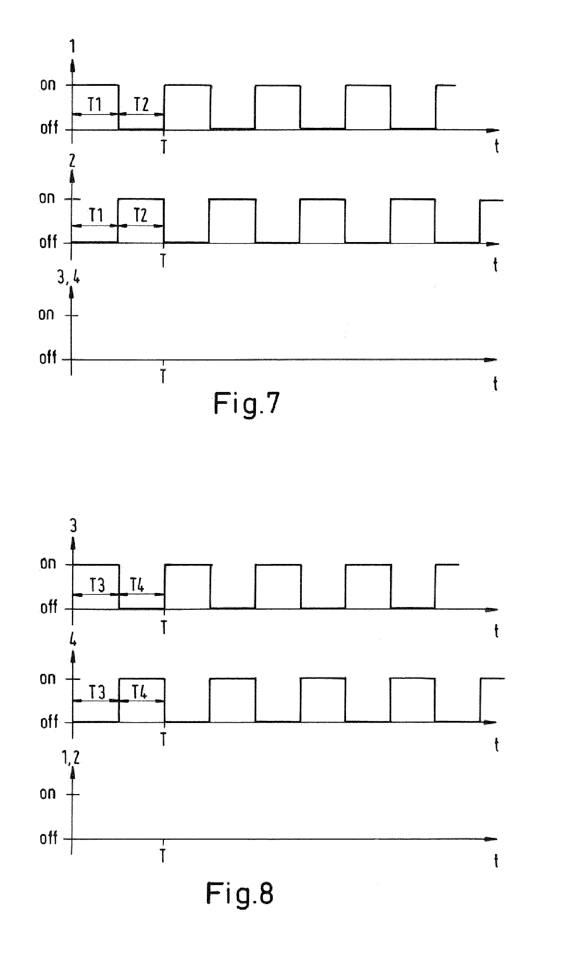

In Fig. 4 ist eine weitere Ausführungsform einer Stromrichterschaltung dargestellt. Hierbei umfasst die Stromrichterschaltung zusätzlich zur Resonanzdrossel 10 weitere induktive Elemente 30, 31, 32, 33, 34, 40, 41, 42, 43, 44, 45. Die Anordnung der induktiven Elemente ist hierbei exemplarisch dargestellt, wobei nicht alle dargestellten induktiven Elemente in einer Stromrichterschaltung vorhanden sein müssen. Zum Schutz gegenüber Spannungen beim Abschalten kann je nach Anordnung der induktiven Elemente eine zusätzliche Reihenschaltung jeweils eines Kondensators 20, 21 und eines Dämpfungswiderstandes 22, 23 erforderlich sein. So ist in Fig. 7 dargestellt, dass eine Reihenschaltung des Kondensators 20 mit dem Dämpfungswiderstand 22 elektrisch parallel zu der Reihenschaltung der ersten Diode 5 und der zweiten Diode 6 geschaltet ist. Entsprechend ist eine Reihenschaltung des Kondensators 21 und des Dämpfungswiderstandes 23 elektrisch parallel zu der Reihenschaltung der dritten Diode 7 und der vierten Diode 8 geschaltet. Hierdurch können Ströme, die z. B. bei einem Abschalten der Schaltelemente 1, 2, 3, 4 fließen, abgebaut werden, ohne dass es zu unzulässig hohen Überspannungen an dem abschaltenden Schaltelement kommt. Es können jedoch auch andere Ausführungen von Entlastungschaltungen vorgesehen werden.

Durch die in Fig. 4 dargestellte abgewandelte Stromrichterschaltung kann ein symmetrischer Betrieb der Stromrichterschaltung erreicht werden. Durch die Anordnung zusätzlicher Induktivitäten kann die Zeitdauer TH1 der ersten Halbschwingung an die Zeitdauer TH2 der zweiten Halbschwingung angepasst werden. Zusätzlich können maximale Amplituden der Halbschwingungen angeglichen werden. So bestimmt sich z. B. die Zeitdauer TH1 der ersten Halbschwingung für die in Fig. 4 dargestellte Stromrichterschaltung gemäß

$$TH1 = \pi \cdot \mathrm{sqrt}((L40+L41+L42+L43+L44+L45+L10) \cdot (1/(1/C9+1/C12))) \qquad \text{Formel 4,}$$

wobei L40, L41, L42, L43, L44, L45 die Induktivitäten der in Fig. 4 dargestellten induktiven Elemente 40, 41, 42, 43, 44, 45 bezeichnen. Entsprechend bestimmt sich die Zeitdauer TH2 der zweiten Halbschwingung gemäß

$$TH2 = \pi \cdot \mathrm{sqrt}((L30+L31+L32+L33+L44+L43+L42+L41+L34+L10)/(1/C9+1/C11+1/C12))$$

$$\text{Formel 5,}$$

wobei L30, L31, L32, L33, L44, L43, L42, L41, L34 die Induktivitäten der in Fig. 4 dargestellten induktiven Elemente 30, 31, 32, 33, 44, 43, 42, 41, 34 bezeichnen.

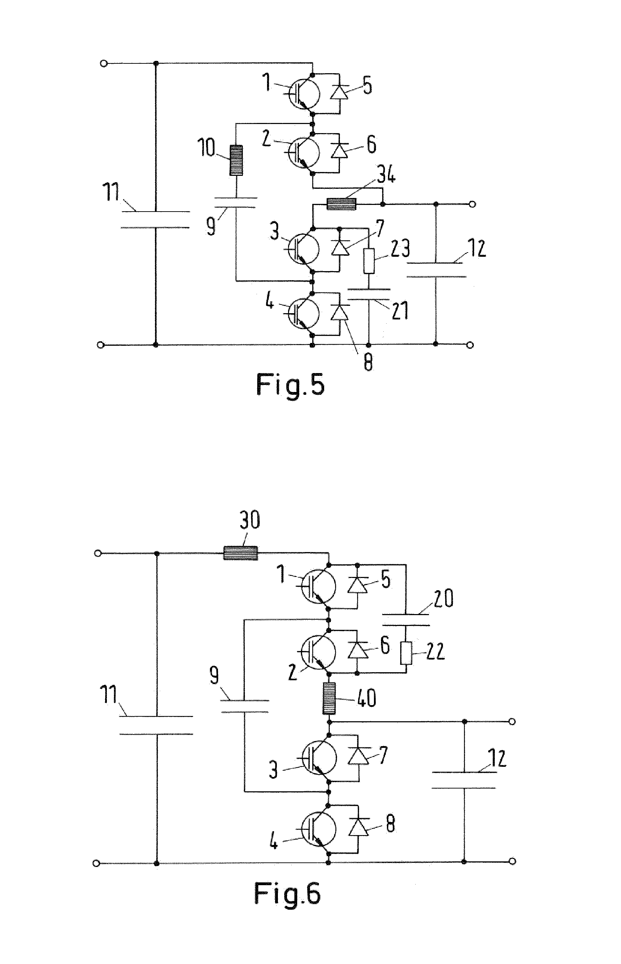

Aus den Formeln 4 und 5 ist ersichtlich, dass die Resonanzdrossel 10 und die induktiven Elemente 41, 42, 43, 44 jeweils für beide Zeitdauern TH1, TH2 bestimmend sind. Daher bietet ein Einbau der induktiven Elemente 41, 42, 43, 44 keinen Vorteil gegenüber einem Einbau der Resonanzdrossel 10. Die induktiven Elemente 30, 31, 32, 33 sind bezüglich der Zeitdauer TH2 der zweiten Halbschwingung gleichwertig, da sie in Reihe zum Eingangskondensator 11 geschaltet sind. Somit kann eine Wirkung der induktiven Elemente 30, 31, 32, 33 beispielsweise durch die Anordnung nur eines der induktiven Elemente 30, 31, 32, 33 erreicht werden. Sofern die Stromrichterschaltung die Resonanzdrossel 10 in der in Fig. 4 dargestellten Anordnung umfasst, wird die Anordnung der induktiven Elemente 40, 45 einen Unterschied der Zeitdauern TH1, TH2 vergrößern. In Fig. 5 ist eine weitere Ausführungsform einer Stromrichterschaltung dargestellt. Hierbei ist dargestellt, dass zusätzlich zur Resonanzdrossel 10 ausschließlich ein weiteres induktives Element 34 zwischen einer Parallelschaltung des zweiten Schaltelements 2 und der zweiten Diode 6 und eine Parallelschaltung des dritten Schaltelements 3 und der dritten Diode 7 geschaltet ist, wobei der Ausgangskondensator 12 parallel zu einer Reihenschaltung des weiteren induktiven Elements 34, der Parallelschaltung des dritten Schaltelements 3 und der dritten Diode 7 und einer Parallelschaltung des vierten Schaltelements 4 und der vierten Diode 8 geschaltet ist. Durch die in Fig. 5 dargestellte Anordnung des weiteren induktiven Elements 34 kann in vorteilhafter Weise eine Angleichung der Zeitdauern TH1, TH2 der Halbschwingungen erfolgen.

In Fig. 6 ist eine weitere Ausführungsform einer Stromrichterschaltung dargestellt. Hierbei umfasst die in Fig. 6 dargestellte Stromrichterschaltung nicht die in Fig. 1 dargestellte Resonanzdrossel 10. Hingegen umfasst die Stromrichterschaltung ein erstes induktives Element 30, welches zwischen einem Eingangskondensator 11 und der Parallelschaltung des ersten Schaltelements 1 und der ersten Diode 5 angeordnet ist. Weiter umfasst die Stromrichterschaltung ein zweites induktives Element 40, welches zwischen einer Parallelschaltung des zweiten Schaltelements 2 und der zweiten Diode 6 und einer Parallelschaltung des dritten Schaltelements 3 und der dritten Diode 7 angeordnet ist, wobei der Ausgangskondensator 12 parallel zu einer Reihenschaltung der Parallelschaltung des dritten Schaltelements 3 und der dritten Diode 7 und einer Parallelschaltung des vierten Schaltelements 4 und der vierten Diode 8 geschaltet ist. In dieser Ausführungsform beeinflusst eine Induktivität L30 die Zeitdauer TH2 der zweiten Halbschwingung und eine Induktivität L40 des weiteren induktiven Elements 40 eine Zeitdauer TH1 der ersten Halbschwingung.

In Fig. 7 ist eine Taktung von Schaltelementen 1, 2, 3, 4 (siehe z. B. Fig. 1) dargestellt, wobei die in Fig. 1 dargestellte Stromrichterschaltung in einem Tiefsetzstellerbetrieb betrieben wird. Hierbei ist dargestellt, dass die Schaltzustände beider aktiven Schaltelement 1, 2 immer invers sind. Hierbei kann eine Ladezeitdauer T1 eines Durchlasstaktes des ersten Schaltelements 1 gleich einer Entladezeitdauer T2 eines Durchlasstaktes des zweiten Schaltelements 2 sein.

Ein Puls-Pause-Verhältnis des ersten Schaltelements 1 beträgt dann T1/T2. Die Schaltelemente 1, 2 werden hierbei für die Zeitdauer T1, T2 eingeschaltet (Durchlasstakt) und werden für die verbleibende Zeitdauer des Taktes ausgeschaltet (Sperrtakt).

In Fig. 7 ist auch dargestellt, dass das dritte und vierte Schaltelement 3, 4 im Tiefsetzstellerbetrieb inaktiv sind.

In Fig. 8 ist eine Taktung der in Fig. 1 dargestellten Stromrichterschaltung in einem Hochsetzstellerbetrieb dargestellt. Hierbei wird in einem Ladevorgang das vierte Schaltelement 4 in einem Durchlasstakt für eine Ladezeitdauer T4 leitend geschaltet. In einem Entladevorgang wird das dritte Schaltelement 3 in einem Durchlasstakt für eine Entladezeitdauer T3 leitend geschaltet. Das Puls-Pause-Verhältnis des dritten Schaltelements 3 beträgt T3/T4, das des vierten Schaltelements beträgt T4/T3.

In Fig. 9a ist ein zeitlicher Verlauf eines Resonanzstromes I_res dargestellt, der sich ergibt, wenn die in Fig. 1 dargestellte Stromrichterschaltung in einem Hochsetzstellerbetrieb betrieben wird. Zu einem Anfangszeitpunkt t0 wird hierbei das in Fig. 1 dargestellte vierte Schaltelement 4 für eine Ladezeitdauer T5 leitend geschaltet. Die Ladezeitdauer T5 ist hierbei größer als die in Formel 1 dargestellte Zeitdauer TH1 einer ersten Halbschwingung. Zum Zeitpunkt t0 beträgt der Resonanzstrom I_res, der in diesem Schaltzustand ein Ladestrom ist, Null. Nach Ablauf der Zeitdauer TH1 der ersten Halbschwingung beträgt der Resonanzstrom I_res wieder Null. Zu einem ersten Schaltzeitpunkt ts1 nach Ablauf der Ladezeitdauer T5 kann das vierte Schaltelement 4 sperrend und das dritte Schaltelement 3 leitend geschaltet, wobei das Schalten ein Null-Strom-Schalten ist. Eine Entladezeitdauer T6 ist hierbei größer als eine Zeitdauer TH2 einer zweiten Halbschwingung, die sich gemäß Formel 2 ergibt. In diesem Schaltzustand ist der Resonanzstrom I_res ein Entladestrom. Da dieser vor Ablauf der Entladezeitdauer T6 wieder auf Null abgeklungen ist, kann an einem weiteren Schaltzeitpunkt ts2 erneut ein Null-Strom-Schalten erfolgen, wobei das dritte Schaltelement 3 sperrend und das vierte Schaltelement 4 leitend geschaltet wird.

In Fig. 9b ist ein Verlauf eines Resonanzstromes I_res dargestellt, der sich ergibt, wenn eine Ladezeitdauer T5 kleiner als eine Zeitdauer TH1 der ersten Halbschwingung gewählt wird. In Fig. 9b ist der zeitliche Verlauf des Resonanzstromes I_res in einem Hochsetzstellerbetrieb der in Fig. 1 dargestellten Stromrichterschaltung dargestellt. Hierbei ist dargestellt, dass der Resonanzstrom I_res am Ende der ersten Halbschwingung im Ladevorgang nicht Null ist und zu diesem ersten Schaltzeitpunkt ts1 das vierte Schaltelement 4 sperrend und das dritte Schaltelement 3 leitend geschaltet wird. Hierdurch ergeben sich höhere Schaltverluste beim Schalten der Schaltelemente 3, 4, jedoch sinken Durchlassverluste, da in einem zeitlichen Mittel die Amplituden der Halbschwingungen des Resonanzstromes I_res kleiner sind. In Fig. 9b ist dargestellt, dass eine Entladezeitdauer T6 gleich einer Zeitdauer TH2 der zweiten Halbschwingung entspricht, die sich gemäß Formel 2 ergibt. Zu einem weiteren Schaltzeitpunkt ts2, zu welchem das dritte Schaltelement 3 sperrend und das vierte Schaltelement 4 leitend geschaltet wird, ergibt sich somit ein Null-Strom-Schalten.

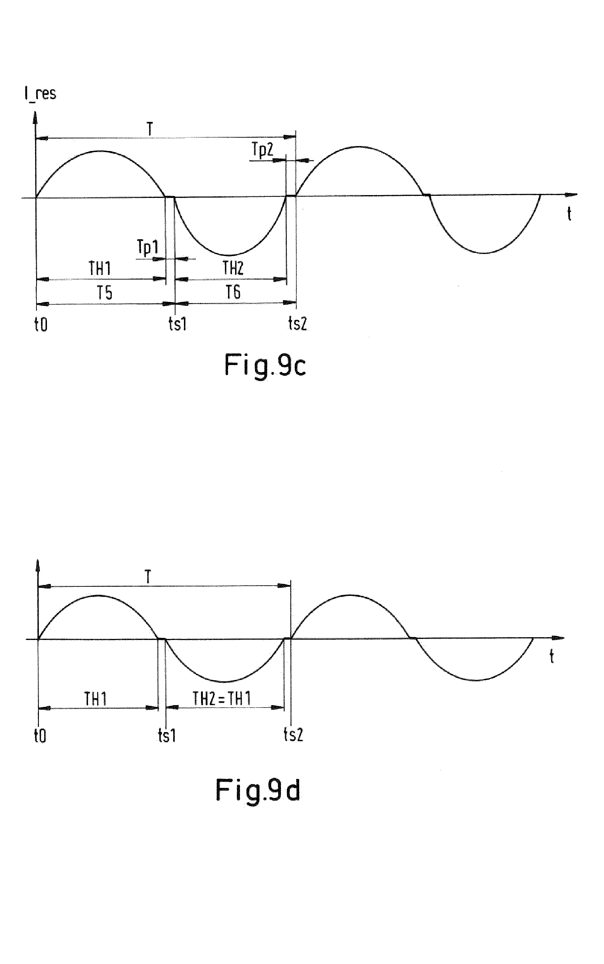

In Fig. 9c ist ein zeitlicher Verlauf eines Resonanzstromes I_res dargestellt, der sich bei einem Hochsetzstellerbetrieb, der in Fig. 1 dargestellten Stromrichterschaltung ergeben kann. Hierbei ist eine Ladezeitdauer T5 gleich einer Summe einer Zeitdauer TH1 einer ersten Halbschwingung, die sich gemäß Formel 1 ergibt, und einer ersten Pausenzeit Tp1. Entsprechend ist eine Entladezeitdauer T6 eine Summe aus einer Zeitdauer TH2 einer zweiten Halbschwingung, die sich gemäß Formel 2 berechnet, und einer zweiten Pausenzeit Tp2. In diesem Fall beträgt ein Puls-Pause-Verhältnis des vierten Schaltelements 4 (TH1+Tp1)/(TH2+Tp2). Auch in diesem Fall kann ein Null-Strom-Schalten erreicht werden.

In Fig. 9d ist ein weiterer Stromverlauf eines Resonanzstromes I_res dargestellt, der sich bei einem Hochsetzstellerbetrieb der in Fig. 4 dargestellten Stromrichterschaltung ergibt. Durch die Anordnung zusätzlicher induktiver Elemente 30, 31, 32, 33, 34, 40, 41, 42, 43, 44, 45 kann eine Zeitdauer TH1 einer ersten Halbschwingung an eine Zeitdauer TH2 einer zweiten Halbschwingung angepasst werden.

Es ist vorteilhaft, dass eine Pulsung bereits in Betrieb ist, wenn eine Eingangsspannung 13 oder eine Ausgangsspannung 14 zugeschaltet wird, damit ein sofortiges Angleichen der Ein- und Ausgangsspannung 13, 14 erfolgen kann. Die Eingangsspannung 13 sollte näherungsweise doppelt so groß wie die Ausgangsspannung 14 sein. Damit z. B. die in Fig. 1 dargestellte Stromrichterschaltung nicht schlagartig extrem hohe Leistungen von z. B. dem Eingangskondensator 11 zum Ausgangskondensator 12 übertragen muss, kann in einem Anschaltvorgang eine Spannungsversorgung mit Hilfe eines Ladewiderstandes durchgeführt werden, so dass z. B. die Eingangsspannung 13 nur langsam ansteigt und ein Ausgleich mit moderaten Strömen erfolgen kann.

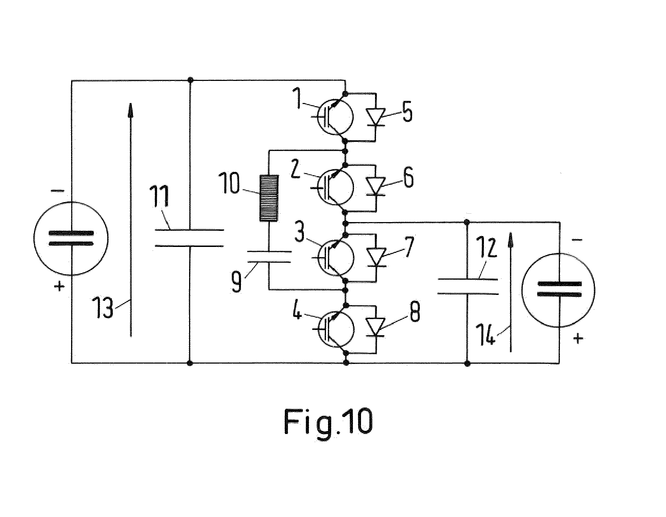

In Fig. 10 ist eine weitere Ausführungsform einer Stromrichterschaltung dargestellt. Hierbei ist im Unterschied zu der in Fig. 1 dargestellten Stromrichterschaltung die Stromrichterschaltung derart aufgebaut, dass ein gemeinsames Bezugspotential des Eingangskondensators 11 und des Ausgangskondensators 12 das Potenzial des Pluspols des Eingangskondensators 11 ist. Auch in dieser Ausführungsform ist der Ausgangskondensator 12 in einem Schaltungszweig angeordnet, der parallel zu der Reihenschaltung aus dem dritten Durchlasselement 7 und dem vierten Durchlasselement 8 geschaltet ist.

**Patentansprüche**

1.  Stromrichterschaltung, umfassend

    - mindestens ein eingangsseitiges kapazitives Element,
    - mindestens ein ausgangsseitiges kapazitives Element,
    - mindestens ein erstes, ein zweites, ein drittes und ein viertes Durchlasselement,
    - ein erstes und mindestens ein weiteres Schaltelement (1, 2),
    - mindestens ein resonantes kapazitives Element und
    - mindestens ein resonantes induktives Element,

    wobei das erste Durchlasselement, das zweite Durchlasselement, das dritte Durchlasselement und das vierte Durchlasselement gleichsinnig in Reihe geschaltet sind,
    wobei eine Reihenschaltung der vier Durchlasselemente parallel zu einem Schaltungszweig geschaltet ist, in dem mindestens das eingangsseitige kapazitive Element angeordnet ist,
    wobei das resonante kapazitive Element in mindestens einem Resonanzzweig angeordnet ist, wobei der mindestens eine Resonanzzweig parallel zu einem Schaltungszweig geschaltet ist, in dem eine Reihenschaltung aus dem zweiten und dem dritten Durchlasselement angeordnet ist,
    wobei das ausgangsseitige kapazitive Element parallel zu einem Schaltungszweig geschaltet ist, in dem mindestens eine Reihenschaltung aus dem dritten und dem vierten Durchlasselement angeordnet ist,
    wobei das erste Schaltelement (1) elektrisch parallel zu dem ersten Durchlasselement und das weitere Schaltelement (2) elektrisch parallel zu dem zweiten Durchlasselement geschaltet ist oder das erste Schaltelement (1) elektrisch parallel zu dem dritten Durchlasselement und das weitere Schaltelement (2) elektrisch parallel zu dem vierten Durchlasselement geschaltet ist,
    **dadurch gekennzeichnet, dass**
    die Kapazität des resonanten kapazitiven Elements eine Größe in einem Bereich von 5 % bis 60 % einer Größe der Kapazität des eingangsseitigen kapazitiven Elements und/oder des ausgangsseitigen kapazitiven Elements beträgt.

2.  Stromrichterschaltung nach Anspruch 1, **dadurch gekennzeichnet, dass** die Stromrichterschaltung ein drittes Schaltelement (3) und ein viertes Schaltelement (4) umfasst, wobei das dritte Schaltelement (3) und das vierte Schaltelement (4) jeweils parallel zu den verbleibenden Durchlasselementen geschaltet sind.

3.  Stromrichterschaltung nach einem der Ansprüche 1 bis 2, **dadurch gekennzeichnet, dass** das mindestens eine resonante induktive Element in einem Ladepfad und/oder in einem Entladepfad des resonanten kapazitiven Elements angeordnet ist.

4.  Stromrichterschaltung nach Anspruch 3, **dadurch gekennzeichnet, dass** das mindestens eine resonante induktive Element in dem mindestens einen Resonanzzweig angeordnet ist.

5.  Verfahren zur Steuerung eines ersten und mindestens eines weiteren Schaltelements einer Stromrichterschaltung, wobei die Stromrichterschaltung

- mindestens ein eingangsseitiges kapazitives Element,
- mindestens ein ausgangsseitiges kapazitives Element,
- mindestens ein erstes, ein zweites, ein drittes und ein viertes Durchlasselement,
- ein erstes und mindestens ein weiteres Schaltelement (1, 2),
- mindestens ein resonantes kapazitives Element und
- mindestens ein resonantes induktives Element umfasst,

wobei das erste Durchlasselement, das zweite Durchlasselement, das dritte Durchlasselement und das vierte Durchlasselement gleichsinnig in Reihe geschaltet sind,
wobei eine Reihenschaltung der vier Durchlasselemente parallel zu einem Schaltungszweig geschaltet ist, in dem mindestens das eingangsseitige kapazitive Element angeordnet ist,
wobei das resonante kapazitive Element in mindestens einem Resonanzzweig angeordnet ist, wobei der mindestens eine Resonanzzweig parallel zu einem Schaltungszweig geschaltet ist, in dem mindestens eine Reihenschaltung aus dem zweiten und dem dritten Durchlasselement angeordnet ist,
wobei das ausgangsseitige kapazitive Element parallel zu einem Schaltungszweig geschaltet ist, in dem mindestens eine Reihenschaltung aus dem dritten und dem vierten Durchlasselement angeordnet ist,
wobei das erste Schaltelement (1) elektrisch parallel zu dem ersten Durchlasselement
und das weitere Schaltelement (2) elektrisch parallel zu dem zweiten Durchlasselement geschaltet ist, wobei in einem Ladevorgang das erste Schaltelemente (1) in einem Durchlasstakt des Schaltelements (1) für eine Ladezeitdauer leitend geschaltet wird,
wobei in einem Entladevorgang das weitere Schaltelement (2) in einem Durchlasstakt des Schaltelements (2) für eine vorbestimmte Entladezeitdauer leitend geschaltet wird.

6.  Verfahren nach Anspruch 5, **dadurch gekennzeichnet, dass** in dem Ladevorgang die Zeitdauer des Durchlasstaktes einer Zeitdauer aus einem vorbestimmten Bereich um eine Zeitdauer einer Halbschwingungsperiode eines ersten Resonanzpfades herum entspricht, wobei die Zeitdauer der Halbschwingungsperiode dem halben Kehrwert der Resonanzfrequenz des ersten Resonanzpfades entspricht, wobei die Resonanzfrequenz des ersten Resonanzpfades in Abhängigkeit des eingangsseitigen kapazitiven Elements, des ausgangsseitigen kapazitiven Elements, des resonanten kapazitiven Elements und mindestens eines induktiven Elements bestimmt wird und/oder in dem Entladevorgang die Zeitdauer des Durchlasstaktes einer Zeitdauer aus einem vorbestimmten Bereich um eine Zeitdauer einer Halbschwingungsperiode eines zweiten Resonanzpfades herum entspricht, wobei die Zeitdauer der Halbschwingungsperiode des zweiten Resonanzpfades dem halben Kehrwert der Resonanzfrequenz des zweiten Resonanzpfades entspricht, wobei die Resonanzfrequenz des zweiten Resonanzpfades in Abhängigkeit des ausgangsseitigen kapazitiven Elements, des resonanten kapazitiven Elements und mindestens eines induktiven Elements bestimmt wird.

7.  Verfahren zur Steuerung eines ersten Schaltelements und mindestens eines weiteren Schaltelements einer Stromrichterschaltung, wobei die Stromrichterschaltung

- mindestens ein eingangsseitiges kapazitives Element,
- mindestens ein ausgangsseitiges kapazitives Element,
- mindestens ein erstes, ein zweites, ein drittes und ein viertes Durchlasselement,
- mindestens ein erstes und ein weiteres Schaltelement (1, 2),
- mindestens einen resonantes kapazitives Element und
- mindestens ein resonantes induktives Element umfasst,

wobei das erste Durchlasselement, das zweite Durchlasselement, das dritte Durchlasselement und das vierte Durchlasselement gleichsinnig in Reihe geschaltet sind,
wobei eine Reihenschaltung der vier Durchlasselemente parallel zu einem Schaltungszweig geschaltet ist, in dem mindestens das eingangsseitige kapazitive Element angeordnet ist,
wobei das resonante kapazitive Element in mindestens einem Resonanzzweig angeordnet ist, wobei der mindestens eine Resonanzzweig parallel zu einem Schaltungszweig geschaltet ist, in dem mindestens eine Reihenschaltung aus dem zweiten und dem dritten Durchlasselement angeordnet ist,
wobei das ausgangsseitige kapazitive Element parallel zu einem Schaltungszweig geschaltet ist, in dem mindestens eine Reihenschaltung aus dem dritten und dem vierten Durchlasselement geschaltet ist,
wobei das erste Schaltelement (1) elektrisch parallel zu dem dritten Durchlasselement und das weitere Schaltelement (2) elektrisch parallel zu dem vierten Durchlasselement geschaltet ist,
wobei in einem Ladevorgang das weitere Schaltelement (2) in einem Durchlasstakt des Schaltelements (2) für eine Ladezeitdauer (T5) leitend geschaltet wird,
wobei in einem Entladevorgang das erste Schaltelemente (1) in einem Durchlasstakt des Schaltelements (1) für eine vorbestimmte Entladezeitdauer (T6) leitend geschaltet wird.

8. Verfahren nach Anspruch 7, **dadurch gekennzeichnet, dass** in dem Ladevorgang die Zeitdauer des Durchlasstaktes einer Zeitdauer aus einem vorbestimmten Bereich um eine Zeitdauer einer Halbschwingungsperiode eines zweiten Resonanzpfades herum entspricht, wobei die Zeitdauer der Halbschwingungsperiode des zweiten Resonanzpfades dem halben Kehrwert der Resonanzfrequenz des zweiten Resonanzpfades entspricht, wobei die Resonanzfrequenz des zweiten Resonanzpfades in Abhängigkeit des ausgangsseitigen kapazitiven Elements, des resonanten kapazitiven Elements und mindestens eines induktiven Elements bestimmt wird und/oder in dem Entladevorgang die Zeitdauer des Durchlasstaktes einer Zeitdauer aus einem vorbestimmten Bereich um eine Zeitdauer einer Halbschwingungsperiode eines ersten Resonanzpfades herum entspricht, wobei die Zeitdauer der Halbschwingungsperiode des ersten Resonanzpfades dem halben Kehrwert der Resonanzfrequenz des ersten Resonanzpfades entspricht, wobei die Resonanzfrequenz des ersten Resonanzpfades in Abhängigkeit des eingangsseitigen kapazitiven Elements, des ausgangsseitigen kapazitiven Elements, des resonanten kapazitiven Elements und mindestens eines induktiven Elements bestimmt wird.

9. Verfahren nach einem der Ansprüche 5 bis 6 oder 7 bis 8, **dadurch gekennzeichnet, dass** ein Puls-Pause-Verhältnis einer Ansteuerung der Schaltelemente (1, 2) Eins beträgt.

10. Verfahren nach einem der Ansprüche 5 oder 7, **dadurch gekennzeichnet, dass** ein Momentanwert eines Ladestroms oder Entladestroms erfasst wird, wobei eine Ansteuerung der Schaltelemente (1, 2, 3, 4) in Abhängigkeit des Momentanwertes erfolgt.

Fig.1

Fig.2

Fig.3

Fig.4

Fig.5

Fig.6

Fig.7

Fig.8

I_res

T

TH1
T5

TH2
T6

t0        ts1        ts2

t

**Fig.9a**

I_res

T

T6=TH2

T5

ts1

TH1

ts2

t0

t

**Fig.9b**

Fig.9c

Fig.9d

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19630284 A1
- DE 19700100 C2
- WO 2006122084 A2
- DE 102005041825